(19) Europäisches Patentamt
European Patent Office
Office européen des brevets

(11) **EP 3 781 447 B1**

(12) **EUROPÄISCHE PATENTSCHRIFT**

(45) Veröffentlichungstag und Bekanntmachung des Hinweises auf die Patenterteilung:
**14.12.2022 Patentblatt 2022/50**

(21) Anmeldenummer: **19708246.4**

(22) Anmeldetag: **21.02.2019**

(51) Internationale Patentklassifikation (IPC):
**B60T 13/66** (2006.01)

(52) Gemeinsame Patentklassifikation (CPC):
**B60T 13/662;** B60T 2201/02; B60T 2201/08

(86) Internationale Anmeldenummer:
**PCT/EP2019/054279**

(87) Internationale Veröffentlichungsnummer:
**WO 2019/201496 (24.10.2019 Gazette 2019/43)**

(54) **STEUERVORRICHTUNG UND VERFAHREN ZUM BETREIBEN MINDESTENS EINER FAHRZEUGVERZÖGERUNGSVORRICHTUNG**

CONTROL UNIT AND METHOD OF CONTROLLING AT LEAST ONE VEHICLE BRAKE SYSTEM

UNITÉ DECONTRÔLE ET PROCÉDÉ DE RÉGLAGE D'UN FREIN DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.04.2018 DE 102018205946**

(43) Veröffentlichungstag der Anmeldung:
**24.02.2021 Patentblatt 2021/08**

(73) Patentinhaber: **Robert Bosch GmbH 70442 Stuttgart (DE)**

(72) Erfinder: **GREINER, Matthias 75397 Simmozheim (DE)**

(56) Entgegenhaltungen:
**EP-A2- 1 108 632    CN-A- 106 402 205 JP-A- 2000 158 973    US-B1- 6 315 371**

**Beschreibung**

Die Erfindung betrifft eine Steuervorrichtung für mindestens eine Fahrzeugverzögerungsvorrichtung eines Fahrzeugs. Ebenso betrifft die Erfindung eine Fahrzeugverzögerungsvorrichtung für ein Fahrzeug. Des Weiteren betrifft die Erfindung ein Verfahren zum Betreiben mindestens einer Fahrzeugverzögerungsvorrichtung eines Fahrzeugs.

Stand der Technik

In der DE 20 2010 017 605 U1 ist eine Steuerung eines elektromechanischen Bremskraftverstärkers offenbart, welche den elektromechanischen Bremskraftverstärker unter Berücksichtigung von Signalen einer Sensoreinrichtung, mittels welcher ein Verschiebeweg eines Eingangselements bestimmbar ist, und einer in der Steuerung hinterlegten Kennlinie ansteuert. Durch das Ansteuern des elektromechanischen Bremskraftverstärkers soll eine mittels des elektromechanischen Bremskraftverstärkers bewirkte Unterstützungskraft gemäß der Kennlinie einstellbar sein.

Des Weiteren offenbart die JP 2000 158973 A eine Vorrichtung, mittels welcher ein Fahrer eines Fahrzeugs in einem Verkehrsstau unterstützbar sein soll. Dazu soll die Vorrichtung dazu ausgelegt sein, anhand von Signalen eines Verkehrsstau-Schalters, eines Fahrzeuggeschwindigkeitssensors, eines Radarsensors und einer Navigationsvorrichtung einen das Fahrzeug umgebenden Verkehrsstau zu erkennen, und, gegebenenfalls, eine Bestromung eines Bremsmotors des Fahrzeugs zu steigern.

Offenbarung der Erfindung

Die Erfindung schafft eine Steuervorrichtung für mindestens eine Fahrzeugverzögerungsvorrichtung eines Fahrzeugs mit den Merkmalen des Anspruchs 1, eine Fahrzeugverzögerungsvorrichtung für ein Fahrzeug mit den Merkmalen des Anspruchs 7 und ein Verfahren zum Betreiben mindestens einer Fahrzeugverzögerungsvorrichtung eines Fahrzeugs mit den Merkmalen des Anspruchs 8.

Vorteile der Erfindung

Die vorliegende Erfindung schafft Möglichkeiten zur selbstlernenden Anpassung einer Kennlinie mindestens einer Fahrzeugverzögerungsvorrichtung eines Fahrzeugs/Kraftfahrzeugs an Präferenzen seines Fahrers. Dazu können mittels der vorliegenden Erfindung von dem Fahrer als persönlich unpassend empfundene Parameter/Charakteristiken der Kennlinie anhand seiner Betätigung eines Gaspedals seines Fahrzeugs/Kraftfahrzeugs und/oder anhand einer Abweichung oder Übereinstimmung eines Fahrverhaltens des Fahrers bezüglich einer aktuellen Verkehrs- und/oder Umgebungssituation und/oder bezüglich einer positionsspezifischen Verkehrs- und/oder Umgebungsinformation erkannt und mittels einer Änderung der jeweiligen Parameter/Charakteristiken der Kennlinie fahrerfreundlicher neu festgelegt werden. Insbesondere kann auf diese Weise die von dem Fahrer persönlich bevorzugte Kennlinie erkannt und anschließend mittels einer entsprechenden Ansteuerung der mindestens einen Fahrzeugverzögerungsvorrichtung umgesetzt werden. Die vorliegende Erfindung trägt damit signifikant zur Steigerung eines Bremskomforts und Fahrkomforts des jeweiligen Fahrers bei.

In einer vorteilhaften Ausführungsform der Steuervorrichtung ist die Elektronikeinrichtung nach einer mittels der mindestens einen angesteuerten Fahrzeugverzögerungsvorrichtung bewirkten Bremsung dazu ausgelegt, zumindest einen Kennlinienwert der Kennlinie zu reduzieren, sofern zumindest die während eines ersten Zeitintervalls nach der bewirkten Bremsung von dem Fahrer vorgegebene zweite Eingangs-Größe einen vorgegebenen Maximalwert übersteigt, und/oder zumindest einen Kennlinienwert der Kennlinie zu steigern, sofern zumindest die während des ersten Zeitintervalls nach der bewirkten Bremsung von dem Fahrer vorgegebene zweite Eingangs-Größe unter einem vorgegebenen Minimalwert bleibt. Auf diese Weise kann "gelernt" werden, welche Präferenzen der Fahrer bezüglich der Kennlinie hat.

Alternativ oder ergänzend kann die Elektronikeinrichtung auch dazu ausgelegt sein, anhand der ermittelten aktuellen Verkehrs- und/oder Umgebungssituation und/oder anhand der ermittelten Position des Fahrzeugs und der positionsspezifischen Verkehrs- und/oder Umgebungsinformation eine Soll-Geschwindigkeit des Fahrzeugs festzulegen, und, sofern zumindest eine Ist-Geschwindigkeit des Fahrzeugs während einer mittels der mindestens einen angesteuerten Fahrzeugverzögerungsvorrichtung bewirkten Bremsung und/oder während eines zweiten Zeitintervalls nach der bewirkten Bremsung um mehr als eine vorgegebene Grenzgeschwindigkeits-Differenz von der festgelegten Soll-Geschwindigkeit des Fahrzeugs abweicht, zumindest einen Kennlinienwert der Kennlinie neu festzulegen. Auch dies ermöglicht ein "Lernen" der Präferenzen des Fahrers bezüglich der Kennlinie.

Vorzugsweise ist die Elektronikeinrichtung dazu ausgelegt, anhand der ermittelten aktuellen Verkehrs- und/oder Umgebungssituation und/oder anhand der ermittelten Position des Fahrzeugs und der positionsspezifischen Verkehrsund/oder Umgebungsinformation als Soll-Geschwindigkeit einen Soll-Geschwindigkeitsverlauf des Fahrzeugs mit einem minimalen Energieverbrauch des Fahrzeugs und/oder einer minimalen Schadstoffemission des Fahrzeugs festzulegen. Energieverbrauch des Fahrzeugs und evtl. auch eine Schadstoffemission des Fahrzeugs können somit mittels dieser Ausführungsform der Steuervorrichtung gesenkt werden.

Die Elektronikeinrichtung kann beispielsweise dazu ausgelegt sein, unter Berücksichtigung der Kennlinie und der ersten Eingangs-Größe einen einem Hauptbremszylinder vorgelagerten Bremskraftverstärker, mindestens einen als Generator betreibbaren Elektromotor, mindestens eine Kolben-Zylinder-Vorrichtung und/oder ein Pumpensystem mit mindestens einer hydraulischen Pumpe als die mindestens eine Fahrzeugverzögerungsvorrichtung anzusteuern. Die Steuervorrichtung kann somit für eine Vielzahl von Fahrzeugverzögerungsvorrichtungen genutzt werden. Die Verwendbarkeit der Steuervorrichtung ist jedoch nicht auf die hier aufgezählten Fahrzeugverzögerungsvorrichtungen beschränkt.

Auch eine Fahrzeugverzögerungsvorrichtung für ein Fahrzeug mit einer entsprechenden Steuervorrichtung bewirkt die vorausgehend beschriebenen Vorteile. Die Fahrzeugverzögerungsvorrichtung kann beispielsweise den Bremskraftverstärker, den mindestens einen als Generator betreibbaren Elektromotor, die mindestens eine Kolben-Zylinder-Vorrichtung und/oder das Pumpensystem mit der mindestens einen hydraulischen Pumpe umfassen. Weitere Beispiele für die Fahrzeugverzögerungsvorrichtung sind möglich.

Des Weiteren schafft auch ein Ausführen eines korrespondierenden Verfahrens zum Betreiben mindestens einer Fahrzeugverzögerungsvorrichtung eines Fahrzeugs die oben genannten Vorteile. Es wird ausdrücklich darauf hingewiesen, dass das Verfahren zum Betreiben mindestens einer Fahrzeugverzögerungsvorrichtung eines Fahrzeugs gemäß den oben erläuterten Ausführungsformen der Steuervorrichtung weiterbildbar ist.

Kurze Beschreibung der Zeichnungen

Weitere Merkmale und Vorteile der vorliegenden Erfindung werden nachfolgend anhand der Figuren erläutert. Es zeigen:

Fig. 1   eine schematische Darstellung einer Ausführungsform der Steuervorrichtung für mindestens eine Fahrzeugverzögerungsvorrichtung eines Fahrzeugs; und

Fig. 2   ein Flussdiagramm zum Erläutern einer Ausführungsform des Verfahrens zum Betreiben mindestens einer Fahrzeugverzögerungsvorrichtung eines Fahrzeugs.

Ausführungsformen der Erfindung

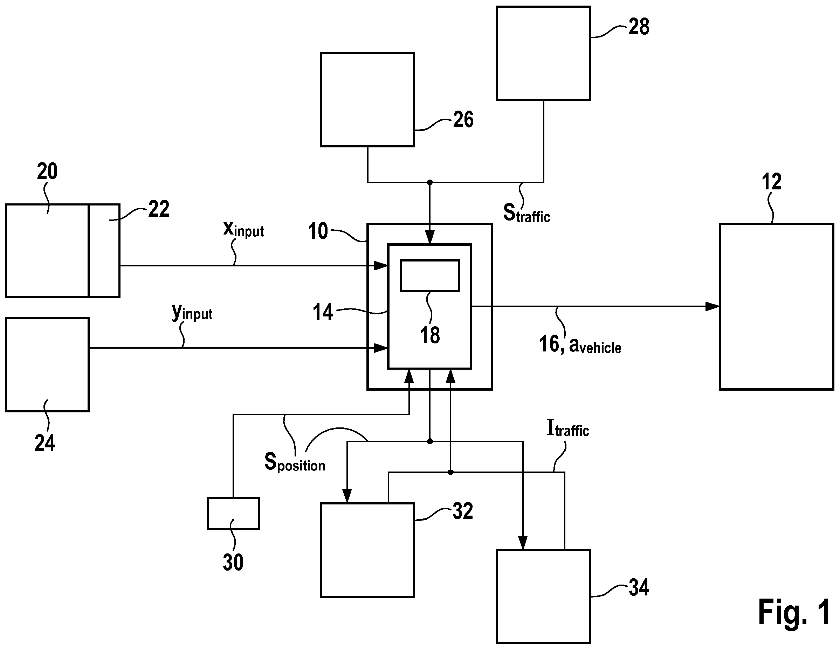

Fig. 1 zeigt eine schematische Darstellung einer Ausführungsform der Steuervorrichtung für mindestens eine Fahrzeugverzögerungsvorrichtung eines Fahrzeugs.

Die im Weiteren erläuterte Steuervorrichtung 10 kann zum Ansteuern/Betreiben mindestens einer Fahrzeugverzögerungsvorrichtung 12 eines Fahrzeugs/Kraftfahrzeugs eingesetzt werden. Es wird ausdrücklich darauf hingewiesen, dass eine Verwendbarkeit der Steuervorrichtung 10 weder auf einen bestimmten Typ der mindestens einen Fahrzeugverzögerungsvorrichtung 12 noch auf einen speziellen Fahrzeugtyp/Kraftfahrzeugtyp des mit der mindestens einen Fahrzeugverzögerungsvorrichtung 12 ausgestatteten Fahrzeugs/Kraftfahrzeugs beschränkt ist. Die Steuervorrichtung 10, bzw. eine Elektronikeinrichtung 14 der Steuervorrichtung 10, kann beispielsweise dazu ausgelegt sein, mittels mindestens eines Steuersignals 16 einen einem Hauptbremszylinder vorgelagerten Bremskraftverstärker, wie insbesondere einen elektromechanischen Bremskraftverstärker (iBooster), mindestens einen als Generator betreibbaren Elektromotor, speziell einen auch als Antriebsmotor des Fahrzeugs/Kraftfahrzeugs einsetzbaren Elektromotor, mindestens eine Kolben-Zylinder-Vorrichtung (eine integrierte Motorbremse, Integrated Power Brake) und/oder ein Pumpensystem mit mindestens einer hydraulischen Pumpe als die mindestens eine Fahrzeugverzögerungsvorrichtung 12 anzusteuern. Die hier aufgezählten Beispiele für die mindestens eine Fahrzeugverzögerungsvorrichtung 12 sind jedoch nicht abschließend zu interpretieren.

In dem Beispiel der Fig. 1 ist die Steuervorrichtung 10 (als "eigenes Bauteil") getrennt von der mindestens einen damit zusammenwirkenden Fahrzeugverzögerungsvorrichtung 12 ausgebildet. Alternativ kann die Steuervorrichtung 10 in der einzigen damit zusammenwirkenden Fahrzeugverzögerungsvorrichtung 12 oder in einer der damit zusammenwirkenden Fahrzeugverzögerungsvorrichtungen 12 verbaut/integriert sein. Die Fahrzeugverzögerungsvorrichtung 12 mit der integrierten Steuervorrichtung 10 kann ein einem Hauptbremszylinder vorgelagerten oder vorlagerbarer Bremskraftverstärker, wie insbesondere ein elektromechanischer Bremskraftverstärker (iBooster), ein als Generator betreibbarer Elektromotor, speziell ein auch als Antriebsmotor des Fahrzeugs/Kraftfahrzeugs einsetzbarer Elektromotor, eine Kolben-Zylinder-Vorrichtung, vorzugsweise eine integrierte Motorbremse (Integrated Power Brake), oder ein Pumpensystem mit mindestens einer hydraulischen Pumpe sein. Weitere Ausführungsbeispiele für die Fahrzeugverzögerungsvorrichtung 12 mit der integrierten Steuervorrichtung 10 sind ebenfalls möglich.

Die Elektronikeinrichtung 14 der Steuervorrichtung 10 hat eine Speichereinheit 18, auf welcher eine Kennlinie abgespeichert ist, welche eine Relation zwischen einer von einem Fahrer mittels einer Betätigung eines Bremsbetätigungselements 20 des Fahrzeugs vorgegebenen ersten Eingangs-Größe $x_{input}$ und einer Soll-Größe $a_{vehicle}$ bezüglich einer mittels der mindestens einen Fahrzeugverzögerungsvorrichtung 12 auf das Fahrzeug auszuübenden Soll-Fahrzeugverzögerung $a_{vehicle}$ vorgibt. Die Soll-Größe $a_{vehicle}$ kann beispielsweise die auf das Fahrzeug auszuübenden Soll-Fahrzeugverzögerung $a_{vehicle}$ oder mindestens eine Ansteuergröße der mindestens einen Fahrzeugverzögerungsvorrichtung 12, welche die entsprechende Soll-Fahrzeugverzögerung $a_{vehicle}$ durch die mindestens eine angesteuerte Fahrzeugverzögerungsvorrichtung 12 auslöst, sein. Beispielsweise kann auf der Speichereinheit 18 (mindestens) eine Kennlinie abgespeichert sein, welche eine Relation zwischen der ersten Eingangs-Größe $x_{input}$ und einer an einen Motor eines elektromechanischen Bremskraftverstärkers, einen Motor einer Kolben-Zylinder-Vorrichtung und/oder einen Motor eines Pumpensystems auszugebenden Soll-Stromstärke, eine Relation zwischen der ersten Eingangs-Größe $x_{input}$ und einer Soll-Drehzahl des Motors des elektromechanischen Bremskraftverstärkers, des Motors der Kolben-Zylinder-Vorrichtung und/oder des Motors des Pumpensystems, eine Relation zwischen der ersten Eingangs-Größe $x_{input}$ und einer Soll-Verstärkerkraft eines Bremskraftverstärkers, insbesondere des elektromechanischen Bremskraftverstärkers, eine Relation zwischen der ersten Eingangs-Größe $x_{input}$ und eines Soll-Generator-Bremsmoments eines als Generator betreibbaren Elektromotors, eine Relation zwischen der ersten Eingangs-Größe $x_{input}$ und einem Soll-Bremsdruck in mindestens einem Radbremszylinder und/oder eine Relation zwischen der ersten Eingangs-Größe $x_{input}$ und einem Soll-Reib-Bremsmoment des mindestens einen Radbremszylinders vorgibt. Die hier aufgezählten Kennlinienbeispiele sind jedoch nicht abschließend zu interpretieren.

Die Elektronikeinrichtung 14 ist dazu ausgelegt, die mindestens eine Fahrzeugverzögerungsvorrichtung 12 unter Berücksichtigung der Kennlinie und der (aktuellen) ersten Eingangs-Größe $x_{input}$ (mittels des mindestens einen Steuersignals 16) derart anzusteuern, dass das Fahrzeug mittels der mindestens einen angesteuerten Fahrzeugverzögerungsvorrichtung 16 abbremsbar ist/abgebremst wird. Vorzugsweise wird dabei das Fahrzeug mit einer der Soll-Fahrzeugverzögerung $a_{vehicle}$ entsprechenden Ist-Fahrzeugverzögerung von der mindestens einen angesteuerten Fahrzeugverzögerungsvorrichtung 16 abgebremst. Das Fahrzeug kann insbesondere mit einer Ist-Fahrzeugverzögerung abbremsbar sein/abgebremst werden, welche eine Funktion der Kennlinie und der (aktuellen) ersten Eingangs-Größe $x_{input}$ ist. Unter dem jeweiligen Abbremsen des Fahrzeugs kann sowohl ein Verlangsamen des Fahrzeugs, als auch ein in den Stillstand bringen (bzw. in dem Stillstand halten) des Fahrzeugs verstanden werden.

Die Steuervorrichtung 10 ist vorzugsweise derart an das Bremsbetätigungselement 20, z.B. ein Bremspedal des Fahrzeugs, und/oder an mindestens einen Bremsbetätigungselementsensor 22 des Fahrzeugs anbindbar/angebunden, dass die von dem Fahrer des Fahrzeugs mittels seiner Betätigung des Bremsbetätigungselements 20 vorgegebene erste Eingangs-Größe $x_{input}$ mittels der Elektronikeinrichtung 14 auswertbar ist. Der mindestens eine Bremsbetätigungselementsensor 22 kann z.B. ein Pedalwegsensor oder Pedalwinkelsensor, ein Stangenwegsensor, ein Differenzwegsensor, ein Fahrerbremskraftsensor und/oder ein Hauptbremszylinderdrucksensor/Vordrucksensor sein. Die Elektronikeinrichtung 14 kann insbesondere dazu ausgelegt sein, einen Pedalweg, einen Eingangsstangenweg, einen Differenzweg, eine auf das Bremsbetätigungselement 20 ausgeübten Fahrerbremskraft und/oder einen Hauptbremszylinderdruck/Vordruck in einem dem Bremsbetätigungselement 20 nachgeordneten Hauptbremszylinder als die erste Eingangs-Größe $x_{input}$ auszuwerten. Die hier genannten Beispiele für das Bremsbetätigungselement 20, den mindestens einen Bremsbetätigungselementsensor 22 und die erste Eingangs-Größe $x_{input}$ sind jedoch nur beispielhaft zu interpretieren. Unter der ersten Eingangs-Größe $x_{input}$ kann insbesondere jede einen Fahrerbremswunsch wiedergebende Größe verstanden werden. Die Elektronikeinrichtung 14 ist dann dazu ausgelegt, die mindestens eine Fahrzeugverzögerungsvorrichtung 12 mittels des mindestens einen Steuersignals 16 unter Berücksichtigung der Kennlinie und der (aktuellen) ersten Eingangs-Größe $x_{input}$ anzusteuern.

Die Elektronikeinrichtung 14 ist zusätzlich dazu ausgelegt, zumindest einen Kennlinienwert der Kennlinie neu festzulegen und die entsprechend geänderte Kennlinie auf der Speichereinheit 18 abzuspeichern. Das Neufestlegen der Kennlinie erfolgt unter Berücksichtigung einer von dem Fahrer mittels einer Betätigung eines Gaspedals 24 des Fahrzeugs/Kraftfahrzeugs vorgegebenen zweiten Eingangs-Größe $y_{input}$, einer mittels mindestens einer fahrzeugeigenen und/oder externen Verkehrs- und/oder Umgebungserfassungseinrichtung 26 und 28 ermittelten aktuellen Verkehrs- und/oder Umgebungssituation und/oder einer ermittelten Position des Fahrzeugs und einer mittels der ermittelten Position ausgelesenen oder abgefragten positionsspezifischen Verkehrs- und/oder Umgebungsinformation $I_{traffic}$. Die Elektronikeinrichtung 14 bietet somit eine selbstlernende Anpassung der Kennlinie an Präferenzen des Fahrers anhand seiner Betätigung des Gaspedals 24 und/oder anhand einer Abweichung oder Übereinstimmung seines Fahrverhaltens bezüglich der aktuellen Verkehrs- und/oder Umgebungssituation und/oder bezüglich der positionsspezifischen Verkehrs- und/oder Umgebungsinformation $I_{traffic}$. Auf diese Weise kann die Kennlinie an persönliche Präferenzen des jeweiligen Fahrers angepasst werden. Die selbstlernende Anpassung der Kennlinie beim Ansteuern der mindestens einen Fahrzeugverzögerungsvorrichtung 12 vermittelt dem Fahrer ein gesteigertes Gefühl von Sicherheit, Zuverlässigkeit und Vertrauen zu seinem Fahrzeug.

Beispielsweise kann die Elektronikeinrichtung 14 nach einer mittels der mindestens einen angesteuerten Fahrzeugverzögerungsvorrichtung 12 bewirkten Bremsung dazu ausgelegt sein, zumindest einen Kennlinienwert der Kennlinie zu reduzieren, sofern zumindest die während eines ersten Zeitintervalls nach der bewirkten Bremsung von dem Fahrer vorgegebene zweite Eingangs-Größe $y_{input}$ einen vorgegebenen Maximalwert übersteigt. Ein starkes Beschleunigen des Fahrzeugs mit einer zweiten Eingangs-Größe $y_{input}$ über dem vorgegebenen Maximalwert durch den Fahrer wird in diesem Fall von der Elektronikeinrichtung 14 als Anzeichen dafür gedeutet, dass das Fahrzeug für seinen Fahrer zu stark abgebremst wurde. Entsprechend kann die Elektronikeinrichtung 14 nach einer mittels der mindestens einen angesteuerten Fahrzeugverzögerungsvorrichtung 12 bewirkten Bremsung auch dazu ausgelegt sein, zumindest einen Kennlinienwert der Kennlinie zu steigern, sofern zumindest die während des ersten Zeitintervalls nach der bewirkten Bremsung von dem Fahrer vorgegebene zweite Eingangs-Größe $y_{input}$ unter einem vorgegebenen Minimalwert bleibt. Die Tatsache, dass der Fahrer nach bewirkten Bremsung lediglich mit einer zweiten Eingangs-Größe $y_{input}$ unter dem vorgegebenen Minimalwert beschleunigt, deutet häufig an, dass der Fahrer die bewirkte Bremsung kaum als ausreichend empfindet und deshalb mit einem erneuten Beschleunigen seines Fahrzeugs zögert.

Vorteilhaft ist es auch, wenn die Elektronikeinrichtung 14 dazu ausgelegt ist, anhand der ermittelten aktuellen Verkehrs- und/oder Umgebungssituation eine Soll-Geschwindigkeit des Fahrzeugs festzulegen. Als Alternative oder als Ergänzung zu der ermittelten aktuellen Verkehrs- und/oder Umgebungssituation können auch die ermittelte Position des Fahrzeugs und die positionsspezifische Verkehrs- und/oder Umgebungsinformation $I_{traffic}$ zur Festlegung der Soll-Geschwindigkeit des Fahrzeugs von der Elektronikeinrichtung 14 auswertbar sein/ausgewertet werden.

Sofern zumindest eine (geschätzte oder gemessene) Ist-Geschwindigkeit des Fahrzeugs während einer mittels der mindestens einen angesteuerten Fahrzeugverzögerungsvorrichtung 12 bewirkten Bremsung und/oder während eines zweiten Zeitintervalls nach der bewirkten Bremsung um mehr als eine vorgegebene (positive) Grenzgeschwindigkeits-Differenz $\Delta_0$ von der festgelegten Soll-Geschwindigkeit des Fahrzeugs abweicht, ist die Elektronikeinrichtung 14 dazu ausgelegt, zumindest einen Kennlinienwert der Kennlinie neu festzulegen. Eine Differenz zwischen der festgelegten Soll-Geschwindigkeit des Fahrzeugs und der Ist-Geschwindigkeit des Fahrzeugs kann beispielsweise gemäß Gleichung (Gl. 1) bestimmt werden mit:

$$(\text{Gl. 1}) \qquad \Delta = v_{determined} - v_{vehicle},$$

wobei $v_{determined}$ die festgelegte Soll-Geschwindigkeit des Fahrzeugs und $v_{vehicle}$ die (geschätzte oder gemessene) Ist-Geschwindigkeit des Fahrzeugs sind.

Eine während der Bremsung auftretende positive Differenz $\Delta$ über der vorgegebenen Grenzgeschwindigkeits-Differenz ist häufig ein Anzeichen dafür, dass das Fahrzeug trotz der Betätigung des Bremsbetätigungselements 20 durch den Fahrer nicht "stark genug" abgebremst wird und deshalb eine Steigerung zumindest eines Kennlinienwerts der Kennlinie wünschenswert ist. Entsprechend zeigt eine während der Bremsung auftretende negative Differenz $\Delta$ unter $-\Delta_0$ oft an, dass das Fahrzeug als Reaktion auf die Betätigung des Bremsbetätigungselements 20 durch den Fahrer "zu stark" abgebremst wird und in diesem Fall eine Reduzierung zumindest eines Kennlinienwerts der Kennlinie besser ist.

Eine während des zweiten Zeitintervalls nach der bewirkten Bremsung auftretende positive Differenz $\Delta$ über der vorgegebenen Grenzgeschwindigkeits-Differenz $\Delta_0$ zeigt oft an, dass das Fahrzeug für seinen Fahrer nicht "stark genug" abgebremst wurde und deshalb für den während des zweiten Zeitintervalls mit einer Beschleunigung des Fahrzeugs zögernden Fahrer eine Steigerung zumindest eines Kennlinienwerts der Kennlinie angenehmer ist. Entsprechend kann aus einer während des zweiten Zeitintervalls nach der bewirkten Bremsung auftretenden negative Differenz $\Delta$ unter $-\Delta_0$ verlässlich abgeleitet werden, dass das Fahrzeug für seinen Fahrer "zu stark" abgebremst wurde und damit für den während des zweiten Zeitintervalls eine höhere Beschleunigung des Fahrzeugs anfordernden Fahrer eine Reduzierung zumindest eines Kennlinienwerts der Kennlinie wünschenswerter ist.

Alle oben beschriebenen Vorgehensweisen zum Neufestlegen zumindest eines Kennlinienwerts der Kennlinie ermöglichen eine selbstlernende Anpassung der Kennlinie an Präferenzen des Fahrers derart, dass unnötige "Korrekturbeschleunigungen" des Fahrzeugs aufgrund eines zuvorigen "zu starken" Abbremsens des Fahrzeugs meistens entfallen. Die Bremsweise des Fahrzeugs wird damit fahrerfreundlicher. Außerdem trägt die selbstlernende Anpassung der Kennlinie an Präferenzen des Fahrers aufgrund des häufigen Entfallens von "Korrekturbeschleunigungen" zur Reduzierung eines Energieverbrauchs des Fahrzeugs, und evtl. auch zur Reduzierung einer Schadstoffemission des Fahrzeugs, bei. Gleichzeitig kann beim Neufestlegen zumindest eines Kennlinienwerts der Kennlinie darauf geachtet werden, dass das Fahrzeug bei einer schnellen Bremsanforderung seines Fahrers in einer Notbremssituation weiterhin innerhalb einer relativ kurzen Bremszeit und mit einem vergleichsweise kurzen Bremsweg abgebremst wird.

Die ermittelte aktuelle Verkehrs- und/oder Umgebungssituation kann mittels mindestens eines Ausgabesignals $S_{traffic}$ der mindestens einen fahrzeugeigenen und/oder externen Verkehrs- und/oder Umgebungserfassungseinrichtung 26 und 28 an die Elektronikeinrichtung 14 ausgegeben oder gesendet sein. Beispielsweise können ein Kamera- und Bildauswertesystem des Fahrzeugs, ein Radarsystem des Fahrzeugs und/oder ein Ultraschallsensorsystem des Fahrzeugs als die mindestens eine fahrzeugeigene Verkehrs- und/oder Umgebungserfassungseinrichtung 26 getrennt von der Steuervorrichtung 10 an dem Fahrzeug montiert und/oder in die Steuervorrichtung 10 integriert sein. Die Steuervorrichtung 10 kann das mindestens eine Ausgabesignals $S_{traffic}$ auch über Funk von mindestens einer fahrzeugexternen Verkehrs- und/oder Umgebungserfassungseinrichtung 28, wie beispielsweise einer ortsfesten Verkehrsüberwachungsvorrichtung, einer "kommunizierenden Ampel" und/oder einem "kommunizierenden Verkehrsschild", empfangen.

Die ermittelte Position des Fahrzeugs kann mittels eines Positionssignals $S_{position}$ von einem fahrzeugeigenen oder externen Positionsbestimmungssystem 30, wie insbesondere einem GPS-System (Global Positioning System), an die Elektronikeinrichtung 14 ausgegeben sein. Die Elektronikeinrichtung 14 kann anschließend mittels der ermittelten Position des Fahrzeugs die positionsspezifische Verkehrs- und/oder Umgebungsinformation $I_{traffic}$ von einer fahrzeugeigenen Informationsspeichereinheit 32, insbesondere von einer in die Steuervorrichtung 10 integrierten Informationsspeichereinheit 32, auslesen oder per Funk von einem fahrzeugexternen/zentralen Informationsspeichersystem 34 abfragen.

Bevorzugter Weise ist die Elektronikeinrichtung 14 dazu ausgelegt, anhand der ermittelten aktuellen Verkehrs- und/oder Umgebungssituation und/oder anhand der ermittelten Position des Fahrzeugs und der positionsspezifischen Verkehrsund/oder Umgebungsinformation $I_{traffic}$ als Soll-Geschwindigkeit einen Soll-Geschwindigkeitsverlauf des Fahrzeugs mit einem minimalen Energieverbrauch des Fahrzeugs und/oder einer minimalen Schadstoffemission des Fahrzeugs festzulegen. Die Elektronikeinrichtung 14 bewirkt in diesem Fall zusätzlich zu der selbstlernenden Anpassung der Kennlinie auch ein Einwirken auf den Fahrer zum Anpassen seines Fahrverhaltens an eine umweltfreundliche Fahrweise.

Die mittels der Elektronikeinrichtung 14 ausgeführte Neufestlegung zumindest eines Kennlinienwerts der Kennlinie kann auch eine Neufestlegung der gesamten Kennlinie sein. Dies kann beispielsweise durch Auswahl einer auf der Speichereinheit 18 hinterlegten Auswahl-Kennlinie, Neufestlegung der ausgewählten Auswahl-Kennlinie als Kennlinie und Abspeichern der neufestgelegten Kennlinie auf der Speichereinheit 18 erfolgen. Ebenso kann jedoch auch mindestens ein Parameter der Kennlinie, wie beispielswiese ein "Null-Abschnitt" der Kennlinie, eine "Stufenhöhe" der Kennlinie, mindestens eine Steigung der Kennlinie, mindestens ein Minimalwert der Kennlinie, mindestens ein Maximalwert der Kennlinie und/oder mindestens eine Hysteresebreite der Kennlinie, zur Neufestlegung zumindest eines Kennlinienwerts der Kennlinie variiert werden. Mittels der Neufestlegung zumindest eines Kennlinienwerts der Kennlinie kann insbesondere ein "Einsprungverhalten" und/oder ein "Verstärkungsverhalten" der mindestens einen Fahrzeugverzögerungsvorrichtung 12 fahrerfreundlicher gestaltet werden. Dabei sind sowohl eine schrittweise Anpassung als auch eine stufenlose Anpassung des "Einsprungverhaltens" und/oder des "Verstärkungsverhaltens" der mindestens einen Fahrzeugverzögerungsvorrichtung 12 an die Präferenzen des Fahrers möglich.

Zur Neufestlegung zumindest eines Kennlinienwerts der Kennlinie kann (von einem Hersteller der Steuervorrichtung 10) ein Algorithmus auf der Elektronikeinrichtung 14 hinterlegt sein, welcher eine feste/vorgegebene Reihenfolge bei der fahrerspezifischen Anpassung der Kennlinie vorgibt. Insbesondere kann gemäß der festen/vorgegebenen Reihenfolge eine Anzahl von Kennlinien und/oder Kennlinienparametern nacheinander durchgetestet werden, bis die Präferenzen des Fahrers erkannt sind. Als Alternative zu der vorausgehend beschriebenen Vorgehensweise kann die Elektronikeinrichtung 14 auch einen Algorithmus aufweisen, welcher selbst "entscheidet", in welche Richtung eine Neufestlegung zumindest eines Kennlinienwerts der Kennlinie auf eine Reaktion des Fahrers getestet wird.

Als optionale Weiterbildung kann die Elektronikeinrichtung 14 zusätzlich dazu ausgelegt sein, durch den Fahrer ausgelöste Modulationen und/oder Schwankungen der ersten Eingangs-Größe $x_{input}$ zu erkennen und unter Berücksichtigung der Modulationen und/oder Schwankungen der ersten Eingangs-Größe $x_{input}$ zumindest einen Kennlinienwert der Kennlinie neu festzulegen und abzuspeichern. Unter den (mittels der Elektronikeinrichtung 14 erkennbaren) Modulationen und/oder Schwankungen kann eine plötzliche Änderung der ersten Eingangs-Größe $x_{input}$ verstanden werden, welche auf eine von dem Fahrer gewünschte Korrektur seiner Betätigung des Bremsbetätigungselements 20 zurückzuführen ist. Die durch den Fahrer ausgelöste Modulationen und/oder Schwankungen der ersten Eingangs-Größe $x_{input}$ zeigen sich beispielsweise als "Zacken", lokale Minima, lokale Maxima, Sprungbewegungen und/oder Zitterbewegungen an der ersten Eingangs-Größe $x_{input}$.

Alle vorausgehend beschriebenen Vorgehensweisen zum Neufestlegen zumindest eines Kennlinienwerts der Kennlinie können zu einer "fahrerspezifischen Verbesserung" der Kennlinie genutzt werden. Die Bremscharakteristik der mindestens einen Fahrzeugverzögerungsvorrichtung 12 entspricht somit immer mehr einer persönlichen Präferenz des Fahrers.

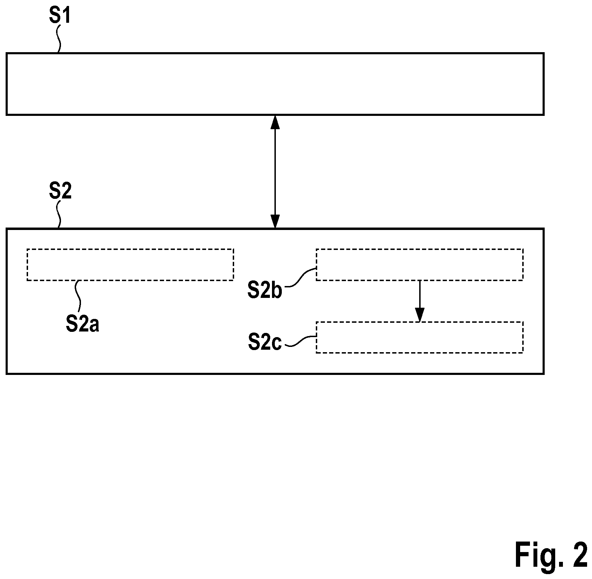

Fig. 2 zeigt ein Flussdiagramm zum Erläutern einer Ausführungsform des Verfahrens zum Betreiben mindestens einer Fahrzeugverzögerungsvorrichtung eines Fahrzeugs.

Es wird ausdrücklich darauf hingewiesen, dass eine Ausführbarkeit des im Weiteren beschriebenen Verfahrens weder auf einen bestimmten Typ der mindestens einen Fahrzeugverzögerungsvorrichtung noch auf einen speziellen Fahrzeugtyp/Kraftfahrzeugtyp des mit der jeweiligen Fahrzeugverzögerungsvorrichtung ausgestatteten Fahrzeugs/Kraftfahrzeugs beschränkt ist. Beispiele für die mindestens eine betriebene Fahrzeugverzögerungsvorrichtung sind oben schon genannt.

Das Verfahren weist einen wiederholt ausgeführten Verfahrensschritt S1 auf, in welchem die mindestens eine Fahrzeugverzögerungsvorrichtung unter Berücksichtigung einer von einem Fahrer mittels einer Betätigung eines Bremsbetätigungselements des Fahrzeugs vorgegebenen ersten Eingangs-Größe und einer auf einer Speichereinheit abgespeicherten Kennlinie, welche eine Relation zwischen der von dem Fahrer vorgegebenen ersten Eingangs-Größe und einer Soll-Größe bezüglich einer mittels der mindestens einen Fahrzeugverzögerungsvorrichtung auf das Fahrzeug auszuübenden Soll-Fahrzeugverzögerung vorgibt, derart angesteuert wird, dass das Fahrzeug mittels der mindestens einen angesteuerten Fahrzeugverzögerungsvorrichtung abgebremst wird. Das Ansteuern der mindestens einen Fahrzeugverzögerungsvorrichtung erfolgt in dem Verfahrensschritt S1 vorzugsweise so, dass mittels der mindestens einen Fahrzeugverzögerungsvorrichtung eine aktuelle Ist-Fahrzeugverzögerung entsprechend einer als Funktion von der ersten Eingangs-Größe und der Kennlinie festgelegten Soll-Fahrzeugverzögerung auf das Fahrzeug ausgeübt wird. Beispiele für die erste Eingangs-Größe und das Bremsbetätigungselement des Fahrzeugs sind oben schon aufgezählt. Auch Ausführungsformen für die Kennlinie sind oben schon genannt.

Vor, gleichzeitig mit oder nach dem Verfahrensschritt S1 wird auch ein Verfahrensschritt S2 ausgeführt, in welchem zumindest ein Kennlinienwert der Kennlinie neu festgelegt und auf der Speichereinheit abgespeichert wird. Das Neufestlegen zumindest eines Kennlinienwerts der Kennlinie erfolgt unter Berücksichtigung einer von dem Fahrer mittels einer Betätigung eines Gaspedals des Fahrzeugs vorgegebenen zweiten Eingangs-Größe, einer mittels mindestens einer fahrzeugeigenen und/oder externen Verkehrs- und/oder Umgebungserfassungseinrichtung ermittelten aktuellen Verkehrs-und/oder Umgebungssituation, und/oder einer ermittelten Position des Fahrzeugs und einer mittels der ermittelten Position ausgelesenen oder abgefragten positionsspezifischen Verkehrs- und/oder Umgebungsinformation.

Beispielsweise umfasst der Verfahrensschritt S2 einen Teilschritt S2a, welcher nach einer mittels der mindestens einen angesteuerten Fahrzeugverzögerungsvorrichtung bewirkten Bremsung ausgeführt wird. Als Teilschritt S2a kann, sofern zumindest die während eines ersten Zeitintervalls nach der bewirkten Bremsung von dem Fahrer vorgegebene zweite Eingangs-Größe einen vorgegebenen Maximalwert übersteigt, zumindest ein Kennlinienwert der Kennlinie reduziert werden. Ebenso kann als Teilschritt S2a, sofern zumindest die während des ersten Zeitintervalls nach der bewirkten Bremsung von dem Fahrer vorgegebene zweite Eingangs-Größe unter einem vorgegebenen Minimalwert bleibt, zumindest ein Kennlinienwert der Kennlinie gesteigert werden.

Alternativ oder ergänzend kann der Verfahrensschritt S2 auch zwei Teilschritte S2b und S2c umfassen. In dem Teilschritt S2b wird zuerst eine Soll-Geschwindigkeit des Fahrzeugs anhand der ermittelten aktuellen Verkehrsund/oder Umgebungssituation und/oder anhand der ermittelten Position des Fahrzeugs und der positionsspezifischen Verkehrs- und/oder Umgebungsinformation festgelegt. Möglichkeiten zum Festlegen der Soll-Geschwindigkeit des Fahrzeugs anhand der hier genannten Daten, bzw. zum Bestimmen der hier genannten Daten, sind oben schon erläutert. In dem Teilschritt S2c wird dann, sofern zumindest eine Ist-Geschwindigkeit des Fahrzeugs während einer mittels der mindestens einen angesteuerten Fahrzeugverzögerungsvorrichtung bewirkten Bremsung und/oder während eines zweiten Zeitintervalls nach der bewirkten Bremsung um mehr als eine vorgegebene Grenzgeschwindigkeits-Differenz von der Soll-Geschwindigkeit des Fahrzeugs abweicht, zumindest ein Kennlinienwert der Kennlinie neu festgelegt.

Da die Vorteile der hier erläuterten Verfahrensschritte den Vorteilen einer entsprechend ausgebildeten Elektronikeinrichtung entsprechen, wird auf eine erneute Aufzählung der Vorteile verzichtet.

**Patentansprüche**

1. Steuervorrichtung (10) für mindestens eine Fahrzeugverzögerungsvorrichtung (12) eines Fahrzeugs mit:

    einer Elektronikeinrichtung (14) mit einer Speichereinheit (18), auf welcher eine Kennlinie abgespeichert ist, welche eine Relation zwischen einer von einem Fahrer mittels einer Betätigung eines Bremsbetätigungselements (20) des Fahrzeugs vorgegebenen ersten Eingangs-Größe ($x_{input}$) und einer Soll-Größe ($a_{vehicle}$) bezüglich einer mittels der mindestens einen Fahrzeugverzögerungsvorrichtung (12) auf das Fahrzeug auszuübenden Soll-Fahrzeugverzögerung ($a_{vehicle}$) vorgibt;

    wobei die Elektronikeinrichtung (14) dazu ausgelegt ist, die mindestens eine Fahrzeugverzögerungsvorrichtung (12) unter Berücksichtigung der Kennlinie und der ersten Eingangs-Größe ($x_{input}$) derart anzusteuern, dass das Fahrzeug mittels der mindestens einen angesteuerten Fahrzeugverzögerungsvorrichtung (12) abbremsbar ist;

    **dadurch gekennzeichnet, dass**:

    die Elektronikeinrichtung (14) zusätzlich dazu ausgelegt ist, unter Berücksichtigung einer von dem Fahrer mittels einer Betätigung eines Gaspedals (24) des Fahrzeugs vorgegebenen zweiten Eingangs-Größe ($y_{input}$) zumindest einen Kennlinienwert der Kennlinie neu festzulegen und die entsprechend geänderte Kennlinie auf der Speichereinheit (18) abzuspeichern.

2. Steuervorrichtung (10) nach Anspruch 1, wobei die Elektronikeinrichtung (14) nach einer mittels der mindestens einen angesteuerten Fahrzeugverzögerungsvorrichtung (12) bewirkten Bremsung dazu ausgelegt ist, zumindest einen Kennlinienwert der Kennlinie zu reduzieren, sofern zumindest die während eines ersten Zeitintervalls nach der bewirkten Bremsung von dem Fahrer vorgegebene zweite Eingangs-Größe ($y_{input}$) einen vorgegebenen Maximalwert übersteigt, und/oder zumindest einen Kennlinienwert der Kennlinie zu steigern, sofern zumindest die während des ersten Zeitintervalls nach der bewirkten Bremsung von dem Fahrer vorgegebene zweite Eingangs-Größe ($y_{input}$) unter einem vorgegebenen Minimalwert bleibt.

3. Steuervorrichtung (10) nach Anspruch 1 oder 2, wobei mittels der Elektronikeinrichtung (14) eine Soll-Geschwindigkeit des Fahrzeugs anhand einer mittels mindestens einer fahrzeugeigenen und/oder externen Verkehrsund/oder Umgebungserfassungseinrichtung (26, 28) ermittelten aktuellen Verkehrsund/oder Umgebungssituation und/oder anhand einer ermittelten Position des Fahrzeugs und einer mittels der ermittelten Position ausgelesenen oder abgefragten positionsspezifischen Verkehrs- und/oder Umgebungsinformation ($I_{traffic}$) festlegbar ist, und wobei die Elektronikeinrichtung (14) zusätzlich dazu ausgelegt ist, zumindest einen Kennlinienwert der Kennlinie unter zusätzlicher Berücksichtigung der festgelegten Soll-Geschwindigkeit des Fahrzeugs neu festzulegen.

4. Steuervorrichtung (10) nach Anspruch 3, wobei die Elektronikeinrichtung (14) dazu ausgelegt ist, sofern zumindest eine Ist-Geschwindigkeit des Fahrzeugs während einer mittels der mindestens einen angesteuerten Fahrzeugverzögerungsvorrichtung (12) bewirkten Bremsung und/oder während eines zweiten Zeitintervalls nach der bewirkten Bremsung um mehr als eine vorgegebene Grenzgeschwindigkeits-Differenz ($\Delta_0$) von der festgelegten Soll-Geschwindigkeit des Fahrzeugs abweicht, zumindest einen Kennlinienwert der Kennlinie neu festzulegen.

5. Steuervorrichtung (10) nach Anspruch 4, wobei die Elektronikeinrichtung (14) dazu ausgelegt ist, anhand der ermittelten aktuellen Verkehrs- und/oder Umgebungssituation und/oder anhand der ermittelten Position des Fahrzeugs und der positionsspezifischen Verkehrs- und/oder Umgebungsinformation ($I_{traffic}$) als Soll-Geschwindigkeit einen Soll-Geschwindigkeitsverlauf des Fahrzeugs mit einem minimalen Energieverbrauch des Fahrzeugs und/oder einer minimalen Schadstoffemission des Fahrzeugs festzulegen.

6. Steuervorrichtung (10) nach einem der vorhergehenden Ansprüche, wobei die Elektronikeinrichtung (14) dazu ausgelegt ist, unter Berücksichtigung der Kennlinie und der ersten Eingangs-Größe ($x_{input}$) einen einem Hauptbremszylinder vorgelagerten Bremskraftverstärker, mindestens einen als Generator betreibbaren Elektromotor, mindestens eine Kolben-Zylinder-Vorrichtung und/oder ein Pumpensystem mit mindestens einer hydraulischen Pumpe als die mindestens eine Fahrzeugverzögerungsvorrichtung (12) anzusteuern.

7. Fahrzeugverzögerungsvorrichtung (12) für ein Fahrzeug mit einer Steuervorrichtung (10) nach einem der vorhergehenden Ansprüche.

8. Verfahren zum Betreiben mindestens einer Fahrzeugverzögerungsvorrichtung (12) eines Fahrzeugs mit den Schritten:

Ansteuern der mindestens einen Fahrzeugverzögerungsvorrichtung (12) unter Berücksichtigung einer von einem Fahrer mittels einer Betätigung eines Bremsbetätigungselements (20) des Fahrzeugs vorgegebenen ersten Eingangs-Größe ($x_{input}$) und einer auf einer Speichereinheit (18) abgespeicherten Kennlinie, welche eine Relation zwischen der von dem Fahrer vorgegebenen ersten Eingangs-Größe ($x_{input}$) und einer Soll-Größe ($a_{vehicle}$) bezüglich einer mittels der mindestens einen Fahrzeugverzögerungsvorrichtung (12) auf das Fahrzeug auszuübenden Soll-Fahrzeugverzögerung ($a_{vehicle}$) vorgibt, derart, dass das Fahrzeug mittels der mindestens einen angesteuerten Fahrzeugverzögerungsvorrichtung (12) abgebremst wird (S1);
**gekennzeichnet durch** die Schritte:

Neufestlegen zumindest eines Kennlinienwerts der Kennlinie unter Berücksichtigung einer von dem Fahrer mittels einer Betätigung eines Gaspedals (24) des Fahrzeugs vorgegebenen zweiten Eingangs-Größe ($y_{input}$); und
Abspeichern der neu festgelegten Kennlinie auf der Speichereinheit (S2).

9. Verfahren nach Anspruch 8, wobei nach einer mittels der mindestens einen angesteuerten Fahrzeugverzögerungsvorrichtung (12) bewirkten Bremsung zumindest ein Kennlinienwert der Kennlinie reduziert wird, sofern zumindest die während eines ersten Zeitintervalls nach der bewirkten Bremsung von dem Fahrer vorgegebene zweite Eingangs-Größe ($y_{input}$) einen vorgegebenen Maximalwert übersteigt, und/oder zumindest ein Kennlinienwert der Kennlinie gesteigert wird, sofern zumindest die während des ersten Zeitintervalls nach der bewirkten Bremsung von dem Fahrer vorgegebene zweite Eingangs-Größe ($y_{input}$) unter einem vorgegebenen Minimalwert bleibt (S2a).

**10.** Verfahren nach Anspruch 8 oder 9, wobei eine Soll-Geschwindigkeit des Fahrzeugs anhand einer mittels mindestens einer fahrzeugeigenen und/oder externen Verkehrs- und/oder Umgebungserfassungseinrichtung (26, 28) ermittelten aktuellen Verkehrs- und/oder Umgebungssituation und/oder anhand einer ermittelten Position des Fahrzeugs und einer mittels der ermittelten Position ausgelesenen oder abgefragten positionsspezifischen Verkehrs- und/oder Umgebungsinformation ($I_{traffic}$) festgelegt wird (S2b), und wobei das Neufestlegen zumindest eines Kennlinienwerts der Kennlinie unter zusätzlicher Berücksichtigung der festgelegten Soll-Geschwindigkeit erfolgt.

**11.** Verfahren nach Anspruch 10,
wobei zumindest ein Kennlinienwert der Kennlinie neu festgelegt wird, sofern zumindest eine Ist-Geschwindigkeit des Fahrzeugs während einer mittels der mindestens einen angesteuerten Fahrzeugverzögerungsvorrichtung (12) bewirkten Bremsung und/oder während eines zweiten Zeitintervalls nach der bewirkten Bremsung um mehr als eine vorgegebene Grenzgeschwindigkeits-Differenz ($\Delta_0$) von der Soll-Geschwindigkeit des Fahrzeugs abweicht (S2c).

**Claims**

**1.** Control unit (10) for at least one vehicle brake system (12) of a vehicle, comprising:

an electronic device (14) with a memory unit (18), on which there is stored a characteristic curve which predefines a relation between a first input variable ($x_{input}$) specified by a driver by means of actuating a brake actuating element (20) of the vehicle and a target variable ($a_{vehicle}$) with respect to a target vehicle retardation ($a_{vehicle}$) to be exerted on the vehicle by means of the at least one vehicle brake system (12); wherein the electronic device (14) is designed to activate the at least one vehicle brake system (12), while considering the characteristic curve and the first input variable ($x_{input}$), in such a way that the vehicle can be braked by means of the at least one activated vehicle brake system (12); **characterized in that**:
the electronic device (14) is additionally designed, while considering a second input variable ($y_{input}$) specified by the driver by means of actuating an accelerator pedal (24) of the vehicle, to redefine at least one value of the characteristic curve and to store the appropriately changed characteristic curve on the memory unit (18).

**2.** Control unit (10) according to Claim 1, wherein, after braking carried out by means of the at least one activated vehicle brake system (12), the electronic device (14) is designed to reduce at least one value of the characteristic curve if at least the second input variable ($y_{input}$) specified by the driver during a first time interval after the braking carried out exceeds a predefined maximum value, and/or to increase at least one value of the characteristic curve if at least the second input variable ($y_{input}$) specified by the driver during the first time interval after the braking carried out remains below a predefined minimum value.

**3.** Control unit (10) according to Claim 1 or 2, wherein, by means of the electronic device (14), a target speed of the vehicle can be defined by using a current traffic and/or environment situation ascertained by means of at least one traffic and/or environment detection device (26, 28) that is on the vehicle and/or external, and/or by using an ascertained position of the vehicle and an item of position-specific traffic and/or environment information ($I_{traffic}$) that has been read or queried by means of the ascertained position, and wherein the electronic device (14) is additionally designed to redefine at least one value of the characteristic curve while additionally considering the defined target speed of the vehicle.

**4.** Control unit (10) according to Claim 3, wherein the electronic device (14) is designed, if at least an actual speed of the vehicle deviates from the defined target speed of the vehicle by more than a predefined limiting speed difference ($\Delta_0$) during braking carried out by means of the at least one activated vehicle brake system (12) and/or during a second time interval after the braking carried out, to redefine at least one value of the characteristic curve.

**5.** Control unit (10) according to Claim 4, wherein the electronic device (14) is designed, by using the ascertained current traffic and/or environment situation and/or by using the ascertained position of the vehicle and the position-specific traffic and/or environment information ($I_{traffic}$), to define as the target speed a target speed characteristic of the vehicle with a minimum energy consumption of the vehicle and/or a minimum pollutant emission of the vehicle.

**6.** Control unit (10) according to one of the preceding claims, wherein the electronic device (14) is designed, while considering the characteristic curve and the first input variable ($x_{input}$), to activate a brake booster connected upstream of a brake master cylinder, at least one electric motor that can be operated as a generator, at least one piston-cylinder device and/or a pump system having at least one hydraulic pump as the at least one vehicle brake system (12).

7. Vehicle brake system (12) for a vehicle comprising a control unit (10) according to one of the preceding claims.

8. Method of operating at least one vehicle brake system (12) of a vehicle, comprising the steps:

activating the at least one vehicle brake system (12) while considering a first input variable ($x_{input}$) specified by a driver by means of actuating a brake actuating element (20) of the vehicle and a characteristic curve stored on a memory unit (18), which predefines a relation between the first input variable ($x_{input}$) specified by the driver and a target variable ($a_{vehicle}$) with respect to a target vehicle retardation ($a_{vehicle}$) to be exerted on the vehicle by means of the at least one vehicle brake system (12), in such a way that the vehicle is braked (S1) by means of the at least one activated vehicle brake system (12) ;
**characterized by** the steps:

redefining at least one value of the characteristic curve while considering a second input variable ($y_{input}$) specified by the driver by means of actuating an accelerator pedal (24) of the vehicle; and
storing the redefined characteristic curve on the memory unit (S2).

9. Method according to Claim 8, wherein, after braking carried out by means of the at least one activated vehicle brake system (12), at least one value of the characteristic curve is reduced if at least the second input variable ($y_{input}$) specified by the driver during a first time interval after the braking carried out exceeds a predefined maximum value, and/or at least one value of the characteristic curve is increased if at least the second input variable ($y_{input}$) specified by the driver during the first time interval after the braking carried out remains below a predefined minimum value (S2a).

10. Method according to Claim 8 or 9, wherein a target speed of the vehicle is defined (S2b) by using a current traffic and/or environment situation ascertained by means of at least one traffic and/or environment detection device (26, 28) that is on the vehicle and/or external, and/or by using an ascertained position of the vehicle and an item of position-specific traffic and/or environment information ($I_{traffic}$) that has been read or queried by means of the ascertained position, and wherein at least one value of the characteristic curve is redefined while additionally considering the defined target speed.

11. Method according to Claim 10, wherein at least one value of the characteristic curve is redefined if at least an actual speed of the vehicle deviates from the target speed of the vehicle by more than a predefined limiting speed difference ($\Delta_0$) during braking carried out by means of the at least one activated vehicle brake system (12) and/or during a second time interval after the braking carried out (S2c).

**Revendications**

1. Unité de contrôle (10) pour au moins une unité de freinage de véhicule (12) d'un véhicule avec :

une installation électronique (14) dotée d'une unité de mémoire (18) sur laquelle une courbe caractéristique est mémorisée qui précise une relation entre une première grandeur d'entrée ($x_{input}$) prédéfinie par un conducteur au moyen d'un actionnement d'un élément d'actionnement de frein (20) du véhicule et une grandeur théorique ($a_{vehicle}$) par rapport à un ralentissement théorique du véhicule ($a_{vehicle}$) à exercer sur le véhicule à l'aide de l'au moins une unité de freinage de véhicule (12) ;
l'installation électronique (14) étant conçue pour piloter l'au moins une unité de freinage de véhicule (12) en tenant compte de la courbe caractéristique et de la première grandeur d'entrée ($x_{input}$) de telle sorte que le véhicule puisse être freiné à l'aide de l'au moins une unité de freinage de véhicule (12) ;
**caractérisée en ce que** :
l'installation électronique (14) est en outre conçue, en tenant compte d'une deuxième grandeur d'entrée ($y_{input}$) prédéfinie par le conducteur au moyen d'un actionnement d'une pédale d'accélération (24) du véhicule, pour fixer de nouveau au moins une valeur de courbe caractéristique pour la courbe caractéristique et pour mettre en mémoire la courbe caractéristique modifiée de façon correspondante sur l'unité de mémoire (18).

2. Unité de contrôle (10) selon la revendication 1, dans laquelle l'installation électronique (14) est conçue pour réduire, après un freinage réalisé à l'aide de l'au moins une unité de freinage de véhicule (12) pilotée, au moins une valeur de courbe caractéristique de la courbe caractéristique dans la mesure où au moins la deuxième grandeur d'entrée ($y_{input}$) prédéfinie par le conducteur pendant un premier intervalle de temps suivant le freinage réalisé dépasse une valeur maximale prédéfinie et/ou pour augmenter au moins une valeur de courbe caractéristique pour la courbe caractéristique dans la mesure où au moins la deuxième grandeur d'entrée ($y_{input}$) prédéfinie par le conducteur pendant le premier intervalle de temps suivant le freinage réalisé reste en-dessous d'une valeur minimale prédéfinie.

3. Unité de contrôle (10) selon la revendication 1 ou 2, dans laquelle, à l'aide de l'installation électronique (14), une vitesse théorique du véhicule peut être déterminée à l'aide d'une situation de trafic et/ou d'environnement actuelle calculée à l'aide d'au moins un dispositif de détermination du trafic et/ou de l'environnement (26, 28) propre au véhicule et/ou externe et/ou à l'aide d'une position du véhicule calculée et d'une information de trafic et/ou d'environnement ($I_{traffic}$) spécifique à la position lue ou interrogée à l'aide de la position calculée et dans laquelle l'installation électronique (14) est en outre conçue pour déterminer au moins une valeur de courbe caractéristique pour la courbe caractéristique en prenant en outre en compte de nouveau la vitesse théorique fixée du véhicule.

4. Unité de contrôle (10) selon la revendication 3, dans laquelle l'installation électronique (14) est en outre conçue, dans la mesure où au moins une vitesse réelle du véhicule s'écarte, pendant un freinage réalisé à l'aide de l'au moins une unité de freinage de véhicule (12) pilotée et/ou pendant un deuxième intervalle de temps après le freinage réalisé, de plus d'une différence de limite de vitesse ($\Delta_0$) prédéfinie par rapport à la vitesse théorique déterminée du véhicule, pour déterminer de nouveau au moins une valeur de courbe caractéristique pour la courbe caractéristique.

5. Unité de contrôle (10) selon la revendication 4, dans laquelle l'installation électronique (14) est conçue pour déterminer, à l'aide de la situation de trafic et/ou d'environnement actuelle calculée et/ou à l'aide de la position du véhicule calculée et de l'information de trafic et/ou d'environnement ($I_{traffic}$) spécifique à la position, comme vitesse théorique une courbe de vitesses théoriques du véhicule avec une consommation minimale d'énergie du véhicule et/ou une émission minimale de polluants du véhicule.

6. Unité de contrôle (10) selon l'une quelconque des revendications précédentes, dans laquelle l'installation électronique (14) est conçue pour piloter, en tenant compte de la courbe caractéristique et de la première grandeur d'entrée ($x_{input}$), un amplificateur de force de freinage disposé en amont d'un maître-cylindre de frein, au moins un moteur électrique pouvant être entraîné sous la forme d'un générateur, au moins une unité piston - cylindre et/ou un système de pompe avec au moins une pompe hydraulique réalisée sous la forme de l'au moins une unité de freinage de véhicule (12).

7. Unité de freinage de véhicule (12) pour un véhicule avec une unité de contrôle (10) selon l'une quelconque des revendications précédentes.

8. Procédé d'actionnement d'au moins une unité de freinage de véhicule (12) d'un véhicule avec les étapes suivantes :

le pilotage d'au moins une unité de freinage de véhicule (12) en tenant compte d'une première grandeur d'entrée ($x_{input}$) prédéfinie par un conducteur à l'aide d'un actionnement d'un élément d'actionnement de frein (20) du véhicule et d'une courbe caractéristique mémorisée sur une unité de mémoire (18) qui stipule une relation entre la première grandeur d'entrée ($x_{input}$) prédéfinie par le conducteur et une grandeur théorique ($a_{vehicle}$) par rapport à un ralentissement théorique du véhicule ($a_{vehicle}$) à exercer sur le véhicule à l'aide de l'au moins une unité de freinage de véhicule (12), de telle sorte que le véhicule soit freiné à l'aide de l'au moins une unité de freinage de véhicule (12) pilotée (S1) ;
**caractérisée par** les étapes suivantes :

la nouvelle détermination d'au moins une valeur de courbe caractéristique de la courbe caractéristique en tenant compte d'une deuxième grandeur d'entrée ($y_{input}$) prédéfinie par le conducteur au moyen d'un actionnement d'une pédale d'accélération (24) du véhicule ; et
la mise en mémoire de la nouvelle courbe caractéristique déterminée sur l'unité de mémoire (S2).

9. Procédé selon la revendication 8, dans lequel après un freinage réalisé à l'aide de l'au moins une unité de freinage de véhicule (12) pilotée, au moins une valeur de courbe caractéristique est réduite pour la courbe caractéristique dans la mesure où au moins la deuxième grandeur d'entrée ($y_{input}$) prédéfinie par le conducteur pendant un premier intervalle de temps suivant le freinage réalisé dépasse une valeur maximale prédéfinie et/ou dans lequel au moins une valeur de courbe caractéristique est augmentée pour la courbe caractéristique dans la mesure où au moins la deuxième grandeur d'entrée ($y_{input}$) prédéfinie par le conducteur pendant le premier intervalle de temps suivant le freinage réalisé reste en-dessous d'une valeur minimale prédéfinie (S2a).

10. Procédé selon la revendication 8 ou 9, dans lequel une vitesse théorique du véhicule est déterminée à l'aide d'une situation de trafic et/ou d'environnement calculée actuelle calculée à l'aide d'au moins un dispositif de détermination du trafic et/ou de l'environnement (26, 28) propre au véhicule et/ou externe et/ou à l'aide d'une position du véhicule calculée et d'une information de trafic et/ou d'environnement ($I_{traffic}$) spécifique à la position lue ou interrogée à l'aide de la position calculée et dans lequel la nouvelle détermination d'au moins une valeur de courbe caractéristique pour la courbe caractéristique s'effectue en prenant en outre en compte de nouveau la vitesse théorique fixée du véhicule.

11. Procédé selon la revendication 10, au moins une valeur de courbe caractéristique étant de nouveau déterminée pour la courbe caractéristique dans la mesure où au moins une vitesse réelle du véhicule s'écarte de plus d'une différence de limite de vitesse ($\Delta_0$) prédéfinie par rapport à la vitesse théorique du véhicule (S2c) pendant un freinage réalisé à l'aide de l'au moins une unité de freinage de véhicule (12) pilotée et/ou pendant un deuxième intervalle de temps suivant le freinage réalisé.

Fig. 1

EP 3 781 447 B1

$x_{input}$

$y_{input}$

$s_{traffic}$

$16, a_{vehicle}$

$S_{position}$

$I_{traffic}$

10

14

18

20

22

24

26

28

12

30

32

34

**S1**

**S2**

**S2a**

**S2b**

**S2c**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202010017605 U1
- JP 2000158973 A